(19) Europäisches Patentamt
European Patent Office
Office européen des brevets

(11) Veröffentlichungsnummer: **0 173 214**
**B1**

(12) # EUROPÄISCHE PATENTSCHRIFT

(45) Veröffentlichungstag der Patentschrift: **31.10.90**

(51) Int. Cl.[5]: **C 08 G 59/14,** C 08 G 59/36, C 08 G 59/40, C 09 D 17/00

(21) Anmeldenummer: **85110367.1**

(22) Anmeldetag: **19.08.85**

(54) **Quartäre Ammoniumgruppen enthaltendes Kunstharz, seine Herstellung und Verwendung.**

(30) Priorität: **28.08.84 DE 3431532**

(43) Veröffentlichungstag der Anmeldung: **05.03.86 Patentblatt 86/10**

(45) Bekanntmachung des Hinweises auf die Patenterteilung: **31.10.90 Patentblatt 90/44**

(84) Benannte Vertragsstaaten: **AT BE DE FR GB NL**

(56) Entgegenhaltungen:
**US-A-4 017 438**
**US-A-4 182 831**

(73) Patentinhaber: **BASF Lacke + Farben Aktiengesellschaft**
**Max-Winkelmann-Strasse 80**
**D-4400 Münster (DE)**

(72) Erfinder: **Loch, Werner, Dr.**
**In der Bleiche 2**
**D-6701 Erpolzheim (DE)**
Erfinder: **Osterloh, Rolf, Dr.**
**Am Wehrhaus 16a**
**D-6718 Gruenstadt (DE)**
Erfinder: **Schupp, Eberhard, Dr.**
**Tilsiter Weg 4**
**D-6830 Schwetzingen (DE)**
Erfinder: **Ahlers, Klaas, Dr.**
**Foerhenweg 21**
**D-4400 Muenster (DE)**

(74) Vertreter: **Mutzbauer, Helmut, Dr. et al**
**BASF Aktiengesellschaft Patentabteilung ZSP - C 6 Carl-Bosch-Strasse 38**
**D-6700 Ludwigshafen/Rhein (DE)**

**EP 0 173 214 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein quartäre Ammoniumgruppen enthaltendes, wasserverdünnbares Kunstharz, ein Verfahren zu dessen Herstellung sowie dessen Verwendung als Bindemittel für kathodisch abscheidbare Elektrotauchlacke, insbesondere als Reibharz für die Herstellung von Pigmentpasten zur Pigmentierung kathodisch abscheidbarer Elektrotauchlacke.

Die Herstellung quartärer Ammoniumsalze durch Umsetzung von tertiären Aminsalzen mit Monoepoxiden ist schon lange bekannt [vgl. Houben-Weyl, Methoden der organische Chemie, Band XI/2, 4. Auflage, S. 610 bis 611 (1958)]. In der US—PS—3 925 180 wird diese Reaktion zur Herstellung eines Pigmentdispergierhilfsmittels, bestehend aus einem Umsetzungsprodukt eines aliphatischen Glycidylethers, oder -esters mit einem sekundären oder tertiären Aminsalz ausgenutzt. Das resultierende quartäre Ammoniumsalz hat ein niedriges Molekulargewicht. Das Pigmenttragevermögen derartiger niedermolekularer Hilfsmittel ist bekanntermaßen gering.

Höhermolekulare Harze, die zur Herstellung stabiler wäßriger Pigmentpasten geeignet sind, werden in der US—PS—3 936 405 beschrieben. Hier werden Epoxidharze, vorzugsweise auf Basis von Polyglycidylethern von Polyphenolen, durch Umsetzung mit u.a. tertiären Aminsalzen in Harze mit quartären Ammoniumgruppen umgewandelt. Harze, die neben quartären Ammoniumgruppen noch basische sekundäre Aminogruppen enthalten, die wertvolle zusätzliche Vernetzungsstellen darstellen und das Pigmentdispergiervermögen derartiger Harze verbessern, sind so nicht realisierbar, da die eingesetzten Aminsalze monofunktionell sein müssen, damit unerwünschte Nebenreaktionen oder gar Gelierung vermieden werden. Dies gilt auch für die in der US—PS—3 962 165 und US—PS—4 035 275 beschriebenen Bindemittel bzw. Pasten, die auf entsprechendem Wege erhalten werden.

Durch Umsetzung eines Polyepoxids mit einem Polyamin, das mindestens zwei tertiäire Aminogruppen in Salzform enthält, wird in der US—PS—4 069 210 ein innerlich ionisiertes quartäre Ammoniumgruppen enthaltendes Harz hergestellt, bei dem die quartären Ammoniumgruppen entlang der Kette angeordnet sind. Harze, die neben quartären Ammoniumgruppen noch zusatzliche besische sekundäre Aminogruppen enthalten, sind auf diesem Wege ebenfalls nicht zugänglich.

In der US—PS—4 071 428 schließlich werden wäßrige Dispersionen aus quartäre Ammoniumgruppen enthaltenden Bindemitteln beschrieben, die durch Umsetzung von polymeren tertiären Aminen mit Monoepoxiden erhalten werden.

Auch auf diesem Wege können keine Harze hergestellt werden, die neben quartären Ammoniumgruppen noch zusätzliche, vernetzungsfähige basische sekundäre Aminogruppen enthalten.

Aufgabe der vorliegenden Erfindung ist es, ein Kunstharz mit erhöhter Vernetzbarkeit und Basizität sowie verbessertem Pigmenttragevermögen bereitzustellen. Es wurde gefunden, daß quartäre Ammoniumgruppen tragende Kunstharze, die neben quartären Ammoniumgruppen noch zusätzliche basische sekundäre Aminogruppen enthalten, hergestellt werden können, indem vorgefertigte niedermolekulare quartäre Ammoniumsalze, die noch eine freie oder ketimingeschützte primäre Aminogruppe enthalten, an Epoxidharze addiert werden.

Gegenstand der vorliegenden Erfindung ist ein quartäre Ammoniumgruppen enthaltendes, wasserverdünnbares Kunstharz, das dadurch gekennzeichnet ist, daß es pro quartäre Ammoniumgruppe noch mindestens eine basische sekundäre und gegebenenfalls tertiäre Aminogruppe enthält und ein Additionsprodukt ist wie es erhalten wird durch Reaktion von

(A) einem quartären Ammoniumsalz mit einem Molekulargewicht von 175 bis 1200, das durch Umsetzung von

(a) einer organischen Verbindung mit mindestens zwei basischen Aminogruppen pro Molekül, von denen eine primär und durch vorherige Umsetzung mit einem Keton als Ketimin geschützt ist und die übrigen basischen Aminogruppen tertiär sind, mit

(b) 15 bis 100 Mol.%, bezogen auf die Stickstoffatome der Komponente (a), einer organischen oder anorganischen Säure und anschließend mit

(c) 15 bis 100 Mol.%, bezogen auf die Stickstoffatome der Komponente (a), mindestens einer Monoepoxidverbindung

bei Temperaturen von 50—100°C und gegebenenfalls hydrolytische Abspaltung der Schutzgruppe hergestellt wird, mit

(B) 1—4 Äquivalenten eines Epoxidgruppen enthaltenden Harzes mit einem mittleren Molekulargewicht $\overline{M}_w$ zwischen 300 und 6000 und im Mittel 1,5 bis 3,0 Epoxidgruppen pro Molekul, pro geschützte bzw. entblockte primäre Aminogruppe der Komponente (A) bei Temperaturen von 30 bis 130°C umgesetzt wird, bis die theoretisch zu erwartende Abnahme des Epoxidwertes erreicht ist, und gegebenenfalls verbleibende Epoxidgruppen mit

(C) äquivalenten Mengen mindestens einer monofunktionellen organischen Verbindung, deren funktionelle Gruppe zur Addition an Epoxid befähigt ist, wobei tertiäre Amine und deren Salze ausgenommen sind, bis kein Epoxid mehr nachweisbar ist, wobei die Umsetzung des quartären Ammoniumsalzes (A) mit den Komponenten (B) und (C) auch in einer Stufe erfolgen kann.

Gegenstand der vorliegenden Erfindung ist auch ein Verfahren zur Herstellung eines derartige quartäre Ammoniumgruppen enthaltenden, wasserverdünnbaren Kunstharzes, das dadurch gekennzeichnet ist, daß

(A) ein quartäres Ammoniumsalz mit einem Molekulargewicht von 175 bis 1200 durch Neutralisation von

(a) einer organischen Verbindung mit mindestens zwei basischen Aminogruppen pro Molekül, von denen eine primär und durch vorherige Umsetzung mit einem Keton als Ketimin geschützt ist und die übrigen basischen Aminogruppen tertiär sind, gegebenenfalls in einem inerten organischen Lösungsmittel, mit

(b) 15 bis 100 Mol.%, bezogen auf die Stickstoffatome der Komponente (a), einer organischen oder anorganischen Säure,

anschließende Umsetzung mit

(c) 15 bis 100 Mol.%, bezogen auf die Stickstoffatome der Komponente (a), mindestens einer Monoepoxidverbindung

bei Temperaturen von 50 bis 100°C und gegebenenfalls hydrolytische Abspaltung der Schutzgruppe hergestellt wird und mit

(B) 1 bis 4 Äquivalenten eines Epoxidgruppen enthaltenden Harzes mit einem mittleren Molekulargewicht $\overline{M}_w$ zwischen 300 und 6000 und im Mittel 1,5 bis 3,0 Epoxidgruppen pro Molekül, pro geschützte bzw. entblockte primäre Aminogruppe der Komponente (A) bei Temperaturen von 30 bis 130°C umgesetzt wird, bis die theoretisch zu erwartende Abnahme des Epoxidwertes erreicht ist, und gegebenenfalls verbleibende Epoxidgruppen mit

(C) äquivalenten Mengen mindestens einer monofunktionellen organischen Verbindung, deren funktionelle Gruppe zur Addition an Epoxid befähigt ist, wobei tertiäre Amine und deren Salze ausgenommen sind,

zur Reaktion gebracht wird, bis kein Epoxid mehr nachweisbar ist, wobei die Umsetzung des quartären Ammoniumsalzes (A) mit den Komponenten (B) und (C) auch in einer Stufe erfolgen kann.

Bevorzugt ist als Komponente (a) ein ketimingeschütztes primär/tertiäres Diamin der allgemeinen Formel (I), wobei $R^1$ und $R^2$

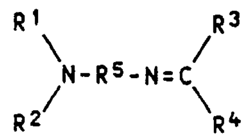

(I)

untereinander gleich oder verschieden sein können und für einen geradkettigen oder verzweigten Alkylrest mit 1 bis 4 Kohlenstoffatomen stehen, $R^3$ und $R^4$ untereinander gleich oder verschieden sein können und für eine geradkettigen oder verzweigten Alkylrest mit 1 bis 8 Kohlenstoffatomen stehen oder das an $R^3$ und $R^4$ gebundene Kohlenstoffatom Bestandteil eines 5- bis 7-gliedrigen carbocyclischen Ringes ist, und $R^5$ geradkettig oder verzweigt sein kann und für einen zweiwertigen aliphatischen oder cycloaliphatischen Rest, der gegebenenfalls Heteroatome, wie Stickstoff, Sauerstoff oder Schwefel enthalten kann, steht.

Gegenstand der vorliegenden Erfindung ist ferner die Verwendung des erfindungsgemäßen Kunstharzes als Bindemittel für kathodisch abscheidbare Elektrotauchlacke, insbesondere als Reibharz für die Herstellung stabilier wäßriger Pigmentpasten zur Pigmentierung kathodisch abscheidbarer Elektrotauchlacke.

Gegenstand der vorliegenden Erfindung ist auch eine Pigmentpaste, bestehend aus

(α) 5 bis 50 Gew.% des erfindungsgemäßen Kunstharzes,

(β) 20 bis 65 Gew.% organischen und/oder anorganischen Pigmenten und/oder Füllstoffen,

(γ) 2 bis 20 Gew.% bei der kathodischen Elektrotauchlackierung üblichen organischen Lösemitteln und

(δ) 28 bis 55 Gew.% Wasser,

mit der Maßgabe, daß die Summe der unter (α) bis (δ) genannten Prozentzahlen gleich 100 ist, sowie gegebenenfalls

(ε) bis 5 Gew.%, bezogen auf die Summe der Komponenten (α) bis (δ), in der Lacktechnologie üblichen Hilfsmitteln und/oder Härtungskatalysatoren.

Auch ein kathodischer Elektrotauchlack, der 2 bis 45 Gew.% der erfindungsgemäßen Pigmentpasten enthält, ist Gegenstand der vorliegenden Erfindung.

Zu den Aufbaukomponenten des erfindungsgemäßen Kunstharzes ist im einzelnen folgendes zu sagen:

(A) Die Komponente (A) ist ein quartäres Ammoniumsalz mit einem Molekulargewicht von 175 bis 1200, vorzugsweise 175 bis 1000, insbedonere 175 bis 500, das durch Umsetzung von

(a) einer organischen Verbindung mit mindestens zwei basischen Aminogruppen pro Molekül, von denen eine primär und durch vorherige Umsetzung mit einem Keton, das aliphatisch oder cycloaliphatisch sein kann, als Ketimin geschützt ist und die übrigen basischen Aminogruppen tertiär sind, mit

(b) 15 bis 100 Mol.%, bezogen auf die Stickstoffatome der Komponente (a), einer organischen oder anorganischen Säure und

(c) 15 bis 100 Mol.%, bezogen auf die Stickstoffatome der Komponente (a), mindestens einer Monoepoxidverbindung, z.B. einer Monoepoxidverbindung aus der Reihe der Alkenoxide, Glycidylether, Glycidylester sowie sonstiger Glycidylverbindungen

und gegebenenfalls nachfolgender hydrolytischer Abspaltung des Ketons erhalten wird.

(a) Als Komponente (a) eignen sich organische Verbindungen mit mindestens zwei basischen Aminogruppen pro Molekül, von denen eine primär und durch vorherige Umsetzung mit einem Keton als Ketimin geschützt ist, und die übrigen basischen Aminogruppen tertiär sind. Die Komponente (a) ist vorzugsweise ein ketimingeblocktes primär/tertiäres Diamin der allgemeinen Formel I,

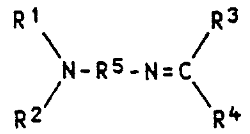

(I)

wobei $R^1$ und $R^2$ untereinander gleich oder verschieden sein können und für einen geradkettigen oder verzweigten Alkylrest mit 1 bis 4, vorzugsweise 1 bis 2 Kohlenstoffatomen stehen, $R^3$ und $R^4$ untereinander gleich oder verschieden sein können und für einen geradkettigen oder verzweigten Alkylrest mit 1 bis 8, vorzugsweise 1 bis 4 Kohlenstoffatomen stehen oder das an $R^3$ und $R^4$ gebundene Kohlenstoffatom Bestandteil eines 5- bis 7-, vorzugsweise 6-gliedrigen, carbocyclischen Ringes ist, und $R^5$ geradkettig oder verzweigt sein kann und für einen zweiwertigen aliphatischen Rest mit 2 bis 12 Kohlenstoffatomen oder einen cycloaliphatischen Rest mit 5 bis 15, vorzugsweise 5 bis 7 Kohlenstoffatomen, vorzugsweise einen aliphatischen Rest mit 2 bis 6 Kohlenstoffatomen steht oder der zweiwertige Rest $R^5$ Heteroatome wie Stickstoff, Sauerstoff oder Schwefel in der Kette oder im Ring enthält.

Die Komponente (a) kann in bekannter Weise aus einem primär/tertiären Diamin der Formel Ia und einem Keton der Formel Ib

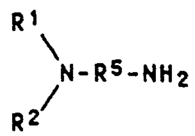

,

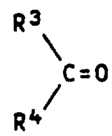

(Ia) (Ib)

unter Wasserabspaltung erhalten werden, wobei die Reste $R^1$ bis $R^5$ die oben angegebene Bedeutung haben.

Beispiele für geeignete primär/tertiäre Diamine der Formel Ia sind N,N-Dimethylethylendiamin; N,N-Dimethylpropylendiamin-1,3; N,N-Diethylethylendiamin; N,N-Diethylpropylendiamin-1,3; N,N-Diisopropylethylendiamin; N,N-Dibutylethylendiamin; N,N-Diethylbutylendiamin-1,4; 1-Diethylamino-4-aminopentan, Dimethylaminoneopentanamin, N,N-Dimethylhexamethylendiamin, 4-Dimethylamino-4'-aminodicyclohexylmethan; N,N-Dimethyl-4,9-dioxadodecan-1,12-diamin sowie Gemische dieser Verbindungen. Bevorzugte primär/tertiäre Diamine sind N,N-Dimethylethylendiamin und N,N-Dimethylpropylendiamin-1,3.

Als Ketone der Formel Ib eignen sich geradkettige und verzweigte aliphatische sowie cycloaliphatische Ketone, beispielsweise Aceton; Methylethylketon, Methylpropylketon, Methylisopropylketon, Methylisobutylketon, Methylisoamylketon, Diethylketon, Dipropylketon und Cyclohexanon. Besonders bevorzugte Ketone sind Aceton, Methylethylketon, Methylisobutylketon und Cylcohexanon.

(b) Die Komponente (b) ist eine organische oder anorganische, vorzugsweise organische Säure und wird in Mengen von 15 bis 100 Mol.%, vorzugsweise 25 bis 70 Mol.%, insbesondere 35 bis 50 Mol.%, bezogen auf die Stickstoffatome der Komponente (a), eingesetzt.

Beispiele für geeignete Säuren sind Salzsäure, Schewefelsäure, Phosphorsäure, Ameisensäure, Essigsäure, Propionsäure, Milchsäure oder dgl. Bevorzugt sind Ameisensäure und Essigsäure.

(c) Die Komponente (c) sind Monoepoxidverbindungen, die in Mengen von 15 bis 100 Mol.%, vorzugsweise 25 bis 70 Mol.%, insbesondere et bis 50 Mol.%, bezogen auf die Stickstoffatome der Komponente (a), eingesetzt werden. Geeignete Monoepoxidverbindungen sind Alkenoxide mit 2 bis 18 Kohlenstoffatomen, beispielsweise Ethylenoxid, Propylenoxid, Butylenoxid, Hexenoxid, wie sie üblicherweise durch Epoxidierung der zugrundeliegenden Olefine erhalten werden. Geeignete Monoepoxidverbindungen sind auch Glycidylether von $C_1$- bis $C_{18}$-Monoalkanolen und Monophenolen, wie beispielsweise Hexylglycidylether, Octylglycidylether, 2-Ethylhexylglycidylether, Dodecylglycidylether, Octadecylglycidylether und Phenylglycidylether sowie Glycidylester gebräuchlicher $C_2$- bis $C_{18}$-Monocarbonsäuren, wie z.B. Versaticsäureglycidylester, Stearinsäureglycidylester, Benzoesäureglycidylester und Glycidylmethacrylat oder andere Glycidylverbindungen wie Glycid und Epichlorhydrin, und Gemische dieser Monoepoxidverbindungen. Bevorzugte Monoepoxidverbindungen sind Butylenoxid und Glycid.

Die Umsetzung der Komponenten (a), (b) und (c) zur Komponente (A) erfolgt bei Temperaturen von 50 bis 100°C, vorzugsweise 70 bis 80°C, gegebenenfalls in geeigneten organischen Lösemitteln, unter Ausschluß von Wasser, wobei je nach Siedepunkt der Komponente (c) in geschlossenen Apparaturen unter Druck oder drucklos in offenen Apparaturen mit Rückflußkühler gearbeitet werden kann. Die Reaktionsdauer beträgt im allgemeinen 1 bis 10 Stunden. Die Umsetzung ist beendet, wenn titrimetrisch

praktisch kein Epoxid mehr nachweisbar ist. Das resultierende quartäre Ammoniumsalz (A) wird entweder direkt als Ketimin oder nach hydrolytischer Abspaltung der Schutzgruppe (z.B. 10 bis 60 Minuten bei 20 bis 100°C mit einem 2- bis 10-fachen Wasserüberschuß) mit der Komponente (B) umgesetzt. Die Abtrennung von überschüssigem Wasser sowie abgespaltenem Keton vor dieser Umsetzung ist in den meisten Fällen nicht erforderlich.

(B) Die Komponente (B) ist ein Epoxidgruppen enthaltendes Harz mit einem mittleren Molekulargewicht $\overline{M}_w$ zwischen 300 und 6000, vorzugsweise 800 und 4000, und im Mittel 1,5 bis 3,0, vorzugsweise zwei Epoxidgruppen pro Molekül. Sie wird bei dem Verfahren zur Herstellung des erfindungsgemäßen Kunstharzes in Mengen von 1 bis 4, vorzugsweise 1 bis 2 Äquivalenten, pro geschützte bzw. entblockte primäre Aminogruppe der Komponente (A) eingesetzt. Geeignete Epoxidgruppen enthaltende Harze (B) sind zum Beispiel Glycidylether von im Mitel mindestens zwei phenolische Hydroxylgruppen pro Molekül enthaltenden Polyphenolen, die sich z.B. in üblicher Weise durch Veretherung der Polyphenole mit einem Epihalohydrin in Gegenwart von Alkali herstellen lassen. Beispiele für geeignete Phenolverbindungen (Polyphenole) sind 2,2-Bis-(4-hydroxyphenyl)-propan, 4,4'-Dihydroxybenzophenon, 1,1-Bis-(4-hydroxyphenyl)-ethan, 1,1-Bis-(4-hydroxyphenyl)-isobutan, 2,2-Bis-(4-hydroxy-tert.butylphenyl)-propan, Bis-(2-hydroxynaphthyl)-methan und 1,5-Dihydroxynaphthalin. Bevorzugt ist es, aromatische Epoxidharze mit einem Molekulargewicht von 800 bis 4000 einzusetzen. Diese können erhalten werden, indem man die oben genannten Diglycidylether mit einem Polyphenol, wie beispielsweise 2,2-Bis-(4-hydroxyphenyl)-propan reagieren läßt und dann die erhaltenen Produkte mit Epichlorhydrin unter Herstellung von Polyglycidylethern weiter umsetzt oder die oben genannten Diglycidylether mit geringeren als äquivalenten Mengen des Polyphenols reagieren läßt. Eine andere geeignete Klass von Epoxidharzen sind Polyglycidylether von phenolischen Novolakharzen.

Ebenfalls geeignet als Komponente (B) sind Polyglycidylether von mehrwertigen Alkoholen, wie Ethylenglykol, Diethylenglykol, Triethylenglykol, Propylenglykol, Propandiol-1,3, 1,5-Pentandiol, 1,2,6-Hexantriol, Glycerin und 2,2-Bis-(4-hydrocycyclohexyl)-propan.

Weitere als Komponente (B) geeignete Epoxidgruppen enthaltende Materialien sind N,N-Diglycidyl-Derivate von N-Heterocyclen und Triglycidylisocyanurat.

Es können auch Polyglycidylester von Polycarbonsäuren sowie Copolymerisate von Glycidylestern α,β-ethylenisch ungesättigter Carbonsäuren, wie beispielsweise Glycidylmethacrylat, mit anderen α,β-ethylenisch ungesättigten Verbindungen bei dem erfindungsgemäßen Verfahren als Komponente (B) eingesetzt werden.

Als Komponente (B) bevorzugt sind 2,2-Bis-(4-hydroxyphenyl)-propandiglycidylether und im Mittel zwei Epoxygruppen pro Molekül enthaltende Polyadditionsprodukte aus 2,2-Bis-(4-hydroxyphenyl)-propan und dessen Diglycidylether.

Aus Elastizitätsgründen kann es von Vorteil sein, die genannten Epoxidharze (B) vor der Umsetzung mit dem quartären Ammoniumsalz (A) mit geringeren als äquivalenten Mengen an langkettigen polyfunktionellen Alkoholen oder Mercaptanen zu modifizieren.

Auch eine Elastifizierung durch langkettige sekundäre Diamine, wie beispielsweise Dimerfettsäure-bis[2-(2-hydroxyethylamino)-ethyl]-amid, die ebenfalls in geringeren als äquivalenten Mengen eingesetzt werden, ist möglich. In diesem Falle können die Elasitifizierung und die Umsetzung mit dem quartären Ammoniumsalz (A) synchron durchgeführt werden.

Geeignet ist auch die Elastifizierung mittels langkettiger primärer Diamine, dern Aminogruppen als Ketimine geschützt sind. Auch sie werden in geringeren als äquivalenten Mengen eingesetzt, und die Elastifizierung kann synchron mit der Anlagerung des quartären Amoniumsalzes (A) durchgeführt werden.

Die Umsetzung des quartären Ammoniumsalzes (A) mit dem Epoxidgruppen enthaltenden Material (B) erfolgt bei Temperaturen von 30 bis 130°C, vorzugsweise 60 bis 120°C, unter Normaldruck, gegebenenfalls in geeigneten Lösemitteln, die unter den angegebenen Reaktionsbedingungen nicht mit Epoxiden reagieren können und zwar so lange, bis die theoretisch zu erwartende Abnahme des Epoxidwertes erreicht ist.

Bei Wahl bestimmter Mengenverhältnisse der Komponenten (A) und (B) können gegebenenfalls mehr oder weniger große Mengen an Epoxidgruppen übrigbleiben. Da das erfindungsgemäße Kunstharz aus Stabilitätsgründen jedoch frei von intaktem Epoxid sein soll, werden in diesem Falle die verbleibenden Epoxidgruppen mit einer Komponenten (C) zur Umsetzung gebracht.

(C) Die Komponente (C), die im Falle verbleibender Epoxidgruppen von (B) in äquivalenten Mengen, bezogen auf die verbleibenden Epoxidgruppen von (B), eingesetzt wird, ist eine beliebige monofunktionelle organische Verbindung, deren funktionelle Gruppe zur Addition an Epoxid befähigt ist, wobei tertiäre Amine und deren Salze ausgenommen sind.

In Frage kommen Monoalkohole, Monophenole, Monomercaptoverbindungen, Monocarbonsäuren, sekundäre Monoamine und Ketimine primärer Monoamine.

Die gegebenenfalls notwendige Umsetzung mit der Komponente (C) erfolgt unter vergleichbaren Bedingungen wie die Reaktion zwischen (A) und (B) und kann in den meisten Fällen auch synchron mit dieser unter Berücksichtigung des anhand des Mengenverhältnisses von (A) und (B) zu erwartenden Restepoxidgehalts durchgeführt werden.

Das erfindungsgemäß hergestellte Kunstharz kann in 100%iger fester, vorzugsweise aber in mit in der Lacktechnologie üblichen Lösemitteln verdünnter Form, bei Feststoffgehalten von 40 bis 80 Gew.%,

vorzugsweise 50 bis 70 Gew.%, eingesetzt werden. Bevorzugte Lösemittel sind Ester, wie beispielsweise Ethylacetat, Butylacetat und/oder Ethylglykolacetat, Ketone, wie Aceton, Methylethylketon, Methylisobutylketon und/oder Cyclohexanon, Alkohole, wie Ethanol, n-Propanol, Isopropanol, Butanole, 2-Ethylhexanol, Isodecanol und/oder Benzylalkohol und Glykolmonoether, wie Methylglykol, Ethyglykol, Propylglykol, Butylglykol, Hexylglykol, Phenylglykol, Methoxypropanol, Phenoxypropanol, Methyldiglykol, Ethyldiglykol und/oder Butyldiglykol. Besonders bevorzugt sind wassermischbare Lösemittel, wie Aceton, Ethanol, Isopropanol, Methylglykol, Ethylglykol, Propylglykol, Butylglykol, Methoxypropanol, Methyl-, Ethyl- und Butyldiglykol.

Das erfindungsgemäße Kunstharz ist ohne weitere Neutralisation mit Säure wasserverdünnbar. Die oben genannten, besonders bevorzugten wassermischbaren Lösemittel können daher auch in Kombination mit Wasser eingesetzt werden. In speziellen Fällen kann es von Vorteil sein, auch Wasser allein als Lösemittel zu verwenden.

Aufgrund einer Wasserverdünnbarkeit ist das erfindungsgemäße Kunstharz besonders als Bindemittel für kathodisch abschiedbare Elektrotauchlacke geeignet und dies insbesondere in Kombination mit anderen zum Stand der Technik gehörenden kathodischen Elektrotauchlackbindemitteln, die mit dem erfindungsgemeäßen Kunstharz verträglich sind.

In ganz besonderem Maße eignet sich das erfindungsgemäße Kunstharz als Reibharz für die Herstellung stabiler wäßriger Pigmentpasten, die für die Pigmentierung kathodisch abscheidbarer Elektrotauchlacke geeignet sind.

Zu den Aufbaukomponenten einer solchen Pigmentpaste, die auch Gegenstand vorliegender Erfindung ist, im einzelnen folgendes zu sagen:

(α) Die Komponente (α) ist das erfindungsgemäße Kunstharz, das in Mengen von 5 bis 50 Gew.%, vorzugsweise 10 bis 30 Gew.%, in der erfindungsgemäßen Pigmentpaste enthalten ist.

(β) Die Komponente (β) sind organische, vorzugsweise anorganische Pigmente und/oder Füllstoffe, die in Mengen von 20 bis 65 Gew.%, vorzugsweise 30 bis 50 Gew.%, in der erfindungsgemäßen Pigmentpaste enthalten sind. Bevorzugte Pigmente und/oder Füllstoffe sind beispielsweise Titandioxid, Chromoxid, Chromate, Eisenoxide, Molybdatpigmente, Bariumsulfat, Kreide, Talkum, Kaolin, basisches Bleisilikat und Ruß.

(γ) Bei der Komponente (γ), die in Mengen von 2 bis 20 Gew.%, vorzugsweise 5 bis 15 Gew.%, in der erfindungsgemäßen Pigmentpaste enthalten ist, handelt es sich um in der Lacktechnologie übliche organische Lösemittel, wie sie bereits oben genannt wurden. Bevorzugt sind unter diesen die wassermischbaren Solventien, insbesondere Methoxypropanol und Butylglykol.

(δ) Die Komponente (δ) ist Wasser. Sie ist in Mengen von 28 bis 55 Gew.%, vorzugsweise 35 bis 45 Gew.%, in der erfindungsgemäßen Pigmentpaste enthalten.

Die Summe der unter (α), (β), (γ) und (δ) genannten Prozentzahlen ist gleich 100.

(ε) die erfindungsgemäße Pigmentpaste kann zusätzlich noch bis zu 5 Gew.%, bezogen auf die Summe der Komponenten (α) bis (δ), einer Komponente (ε) enthalten. Es sind dies in der Lacktechnologie übliche Hilfsstoffe, wie Verlaufsmittel, Netzmittel, Entschäumer, Dispergierhilfsmittel, Antiabsetzmittel sowie Härtungskatalysatoren. Als Härtungskatalysatoren geeignet sind Zinnverbindungen, wie beispielsweise Dibutylzinndilaurat, Dibutylzinnoxid, Zinnacetat und dgl. Geeignet sind auch Blei- und Kupferverbindungen, z.B. Bleinaphthenat, Bleioctoat, Blei- oder Kupferacetat.

Zur Herstellung der erfindungsgemäßen Pigmentpaste wird beispeilsweise die Komponente (β) in dem in (γ) gelösten erfindungsgemäßen Kunstharz (α), beispielsweise mit Hilfe eines Dissolvers, angeteigt und nach Zugabe von Wasser (δ) und gegebenenfalls (ε) nach in der Lacktechnologie üblichen Methoden naß vermahlen. Bevorzugt dafür geeignete Mahlaggregate sind die Dreiwalze sowie Kugelmühlen, Rürwerksmühlen, Sandmühlen etc. Die nach dem Mahlen in der erfindungsgemäßen Pigmentpaste enthaltenen Pigmente und/oder Füllstoffe (β) weisen im allgemeinen eine Korngröße nach DIN 53 203 unter 15 μm auf.

Die erfindungsgemäße Pigmentpaste dient zur Pigmentierung beliebiger kathodischer elektrotauchlacke, die nicht Gegenstand vorliegender Erfindung sind, wie beispielsweise Systeme auf Basis von Epoxid/Amin-Addukten, die entweder in bekannter Weise aus Epoxidharzen und Aminen oder aus Epoxidharzen und Ketiminen, primärer Diamine, nach der DE—A—3325061 herstellt werden, in Kombination mit asymmetischen Harnstoffvernetzern, wie sie in den DE—A—3311514 und 3311516 beschrieben werden. Elektrotauchlacke auf Basis OH-gruppenhaltiger kationisch modifizierter Trägerharze, die mit α-Hydroxyestergruppen enthaltenden Vernetzern gehärtet werden und in der EP—A—40 867 beschrieben sind, können ebenfalls in vorteilhafter Weise mit der erfindungsgemaßen Pigmentpaste pigmentiert werden.

Die Pigmentierung erfolgt durch einfaches Einrühren der erfindungsgemäßen Pigmentpaste in die jeweilige Klarlackdispersion, die üblicherweise aus Trägerharz, Venetzer und Wasser besteht. Dabei werden im allgemeinen 2 bis 45 Gew.%, vorzugsweise 5 bis 30 Gew.%, bezogen auf das fertige Elektrotauchbad, an erfindungsgemäßer Pigmentpaste eingesetzt. Durch Verdünnen mit entionisiertem Wasser wird im allgemeinen ein Feststoffgehalt des Elektrotauchbades von 5 bis 30, vorzugsweise 10 bis 25 Gew.%, eingestellt. Die Bad-pH-Werte liegen im allgemeinen bei 6,0 bis 8,5, vorzugsweise 6,5 bis 7,5.

Die Bäder können außerdem weitere übliche Zusatzstoffe, wie Verlaufsmittel, Netzmittel, oberflächenaktive Mittel, Härtungskatalysatoren und Zusätze zur Verbesserung des Korrosionsschutzes, wie beispielsweise Cu(II)-Salze, enthalten.

Die erfindungsgemäßen Elektrotauchbäder lassen sich für kathodisches Elektrotauchlackieren von beliebigen elektrisch leitenden Substraten, wie beispielsweise Eisen, Aluminium, Kupfer und dgl., die gegebenenfalls chemisch vorbehandelt, z.B. phosphatiert sein können, verwenden.

Die Abscheidespannungen betragen im allgemeinen 50 bis 400 V, vorzugsweise 150 bis 350 V. Die Abscheidung erfolgt im allgemeinen bei 15 bis 40°C während einer Zeit von 1 bis 3 Minuten. Nach dem Abspülen der auf den elektrisch leitenden Körpern kathodisch abgeschiedenen Filme werden diese bei 120 bis 200°C 10 bis 30 Minuten gehärtet. Es entstehen Überzüge mit hervorragenden mechanischen Eigenschaften, wie großer Härte und Kratzfestigkeit bei guter Elastizität und fester Haftung auf dem Substrat.

Weiterhin zeichnen sich die erhaltenen Überzüge durch hohe Lösemittelbeständigkeit und Beständigkeit im Salzsprühtest sowie durch guten Umgriff aus.

Die folgenden Beispiele sollen den Gegenstand der vorliegenden Erfindung näher erläutern, ohne diesen einzuschränken. Die angegebenen Teile und Prozente beziehen sich, soweit nicht anders angegeben, auf das Gewicht.

### Beispiel 1

Herstellung des niedermolekularen quartären Ammoniumsalzes ($A_1$):

311,5 Teile N,N-Dimethylethylendiamin werden in 571 Teilen Methylisobutylketon gelöst. Bei einer Temperatur von 120 bis 150°C werden binnen 6 Stunden etwa 65 Teile Wasser ausgekreist. Für die resultierende etwa 75%ige Lösung des Ketimins in Methylisobutylketon wird durch Titration ein Aminäquivalentgewicht von 113 g ermittelt.

226 Teile dieser Ketiminlösung werden mit 60 Teilen 100%iger Essigsäure neutralisiert und mit 74 Teilen Glycid versetzt. nach 2stündiger Umsetzung bei 100°C ist kein Epoxid mehr nachweisbar. Anschließend wird mit 90 Teilen Wasser 1 Stunde bei 80°C hydrolysiert. Die so erhaltene Lösung des quartären Ammoniumsalzes in Methylisobutylketon/Wasser ist ca. 49%ig. Sie neigt zur Zweiphasenbildung, kann aber in gut aufgeschüttelter Form direkt der Folgeumsetzung unterworfen werden.

Herstellung des quartäre Ammoniumgruppen enthaltenden Kunstharzes:

425 Teile eines handelsüblichen Polyadditionsprodukts aus 2,2-Bis-(4-hydroxyphenyl)-propan und dessen Diglycidylether, mit einem Epoxidäquivalentgewicht von ca. 1700 g, werden in 225 Teilen Butylglykol gelöst und mit 112,5 Teilen der zweiphasigen ca. 49%igen quartären Ammoniumsalz-Lösung ($A_1$) versetzt. Die Mischung wird etwa 3 Stunden bei 60°C umgesetzt. Anschließend ist praktisch kein Epoxid mehr nachweisbar. Das Harz wird mit Butylglykol auf einen Festkörpergehalt von ca. 55% verdünnt.

Herstellung der Pigmentpaste:

In einer Rührwerksmühle werden 330 Teile des quartäre Ammoniumgruppen enthaltenden Kunstharzes, 330 Teile Rutil, 180 Teile Kaolin, 30 Teile basisches Bleisilikat, 15 Teile Ruß, 614 Teile Wasser und 4500 Teile Glasperlen (Durchmesser 2 mm) ca. 45 Minuten bei einer Drehzahl von 1000 U/min gerührt. Nach dem Abtrennen der Glasperlen wird eine Graupaste mit einem Festkörpergehalt von 51% erhalten.

### Beispiel 2

Herstellung des niedermolekularen quartären Ammoniumsalzes ($A_2$)

1444 Teile N,N-Dimethylpropylendiamin werden in 2284 Teilen Methylisobutylketon gelöst. Bei einer Temperatur von 120 bis 150°C werden binnen 6 Stunden etwa 260 Teile Wasser ausgekreist. Für die resultierende etwa 75%ige Lösung des Ketimins in Methylisobutylketon wird durch Titration ein Aminäquivalentgewicht von 124 g ermittelt.

670 Teile dieser Ketiminlösung werden mit 162 Teilen 100%iger Essigsäure neutralisiert und mit 194 Teilen Butylenoxid versetzt. Nach 90 minütiger Reaktionszeit bei 82 bis 100°C ist kein Epoxid mehr nachweisbar. Anschließend wird mit 243 Teilen Wasser 1 Stunde bei 80°C hydrolysiert. Die so erhaltene Lösung des quartären Ammoniumsalzes in Methylisobutylketon/Wasser ist ca. 50%ig und neigt zur Zweiphasenbildung.

Herstellung des quartäre Ammoniumgruppen enthaltenden Kunstharzes:

1615 Teile des in Beispiel 1 genannten Epoxidharzes werden in 855 Teilen Butylglykol gelöst und mit 446,5 Teilen der gut durchmischten zweiphasigen ca. 50 %igen quartären Ammoniumsalz-Lösung ($A_2$) versetzt. Die Mischung wird etwa 3 Stunden bei 60°C umgesetzt. Anschließend ist kein Epoxid mehr nachweisbar. Das Harz wird mit Butylglykol auf einen Festkörpergehalt von ca. 55% verdünnt.

Herstellung der Pigmentpaste:

Unter Verwendung dieses quartäre Ammoniumgruppen enthaltenden Kunstharzes anstelle des entsprechenden Harzes aus Beispiel 1 wird, wie in Beispiel 1 beschrieben, eine 51%ige wäßrige Graupaste hergestellt.

### Beispiel 3

Herstellung des niedermolekularen quartären Ammoniumsalzes ($A_3$):

Wie in Beispiel 2 beschrieben, wird eine ca. 75%ige Ketiminlösung mit einem Aminäquivalentgewicht

von 124 g hergestellt. 670 Teile dieser Lösung werden mit 162 Teilen 100%iger Essigsäure neutralisiert und mit 388 Teilen Butylenoxid verstzt. Nach 90 minütiger Reaktionszeit bei 82 bis 100°C ist kein Epoxid mehr nachweisbar. Anschließend wird mit 243 Teilen Wasser 1 Stunde bei 80°C hydrolysiert. Die so erhaltene Lösung des quartären Ammoniumsalzes in Methylisobutylketon/Wasser ist ca. 75%ig und neigt wie in den vorangegangenen Beispielen zur Zweiphasenbildung.

Herstellung des quartäre Ammoniumgruppen enthaltenden Kunstharzes:

1615 Teile des in Beispiel 1 genannten Epoxidharzes werden in 855 Teilen Butylglykol gelöst und mit 512 Teilen der gut durchmischten zweiphasigen ca. 57%igen quartären Ammoniumsalz-Lösung ($A_3$) versetzt. Die Mischung wird etwa 3 Stunden bei 60°C umgesetzt. Anschließend ist kein Epoxid mehr nachweisbar. Das Harz wird mit Butylglykol auf einen Festkörpergehalt von ca. 55% verdünnt.

Herstellung der Pigmentpaste:

Unter Verwendung dieses quartäre Ammoniumgruppen enthaltenden Kunstharzes anstelle des entsprechenden Harzes aus Beispiel 1 wird, wie im Beispiel 1 beschrieben, eine 51%ige wäßrige Graupaste hergestellt.

Beispiel 4

Beispiel 4 demonstriert das erfindungsgemäße Herstellverfahren für den Fall, daß auf eine hydrolytische Spaltung der Ketiminvorstufe verzichtet wird.

Herstellung des niedermolekularen ketiminisierten quartären Ammoniumsalzes ($A_4$):

Wie im Beispiel 2 beschrieben, wird eine niedermolekulare quartäre Ammoniumverbindung ($A_4$) hergestellt, bis der Epoxidwert des zugesetzten Butylenoxid auf 0 gefallen ist. Es wird keine Hydrolyse durchgeführt. Man erhält ca. 84%ige homogene Methylisobutylketonische Lösung eines niedermolekularen quartären Ammoniumsalzes, dessen zusätzliche primäre Aminogruppe ketiminisiert vorliegt.

Herstellung des quartäre Ammoniumgruppen enthaltenden Kunstharzes:

1615 Teile des in Beispiel 1 genannten Epoxidharzes werden in 855 Teilen Butylglykol gelöst und mit 358 Teilen der ca. 84%igen ketiminiserten quartären Ammoniumsalz-Lösung ($A_4$) versetzt. Nach ca. 3stündiger Umsetzung bei 60°C ist kein Epoxid mehr nachweisbar. Das Harz wird mit Butylglykol auf einen Festkörpergehalt von ca. 55% verdünnt.

Herstellung der Pigmentpaste:

Unter Verwendung dieses quartäre Ammoniumgruppen enthaltenden Kunstharzes anstelle des entsprechenden Harzes aus Beispiel 1 wird, wie im Beispiel 1 beschrieben, eine 51%ige wäßrige Graupaste bereitet.

Prüfung der Pigmentpasten

Beispiel 5

Beispiel 5 beschreibt die Verwendung der Pigmentpasten aus den Beispielen 1, 2, 3 und 4 für die Pigmentierung eines kathodischen Elektrotauchlacksystems, bestehend aus dem Trägerharz ($X_1$) und dem Vernetzer (Y).

a) Herstellung des Trägerharzes ($X_1$):

1455 Teile eines handelsüblichen Polyadditionsprodukts aus 2,2-Bis-(4-hydroxyphenyl)-propan und dessen Diglycidylether, mit einem Epoxidäquivalentgewicht von 485, werden 80%ig in Xylol gelöst. Bei 60°C werden 150 Teile Diethanolamin hinzugefügt und 15 Minuten bei dieser Temperatur umgesetzt. Anschließend werden 990 Teile Hexamethylendiamin hinzugefügt. Es kommt zu einer stark exothermen Reaktion. Nach Reaktionsende werden Xylol und überschüssiges Hexamethylendiamin im Vakuum abdestilliert (ca. 30 Minuten 195 bis 205°C). Dann werden 70 Teile Xylol und 290 Teile Dimerfettsäure hinzugefügt und aus der Mischung 1 Stunde lang bei einer Temperatur von 190 bis 220°C Wasser ausgekreist. Das Reaktionsprodukt wird mit 100 Teilen Butylglykol und 700 Teilen Isobutanol auf einen Festkörpergehalt von 70% verdünnt. Das resultierende Trägerharz ($X_1$) hat eine Aminzahl von 77 mg KOH/g.

b) Herstellung des Vernetzers (Y)

Der Vernetzer (Y) ist identisch mit der Komponente $B_3$ (=15%ige Lösung eines Umsetzungsprodukts aus äquivalenten Mengen isocyanuratisiertem Hexamethylendiisocyanat und Dibutylamin in Dioxan) aus der DE—A—3311516.

c) Herstellung eines unpigmentierten Elektrotauchlackes

100 Teile Trägerharz ($X_1$) aus Beispiel 5a) und 60 Teile Vernetzer (Y) aus Beispiel 5b) werden gemischt. Nach Zusatz von 2,3 Teilen Essigsäure wird die Mischung unter Rühren portionsweise mit Wasser auf ein Gesamtgewicht von ca. 900 Teilen verdünnt.

d) Herstellung und Prüfung der pigmentierten Elektrotauchlacke

Zu jeweils 900 Teilen Klarlackbad aus Beispiel 5c) werden jeweils 100 Teile Pigmentpaste nach den Beispielen 1, 2, 3 und 4 gegeben. Die Bäder werden dann 168 Stunden bei 28°C gerührt. Auf kathodisch geschalteten, zinkphosphatierten Prüftafeln aus Stahl werden dann Lackfilme innerhalb von 2 Minuten bei der in Tabelle 1 angegebenen Spannung abgeschieden und 20 Minuten bei 160°C eingebrannt. Es werden Überzüge mit brauchbarem Verlauf erhalten. Weitere Eigenschaften der Beschichtungen zeigt die folgende Tabelle 1.

Beispiel 6

Beispiel 6 beschreibt die Verwendung der Pigmentpaste aus Beispiel 2 für die Pigmentierung eines kathodischen Elektrotauchlacksystems, bestehend aus einem Trägerharz ($X_2$), kombiniert mit dem Vernetzer (Y) aus Beispeil 5.

a) Herstellung des Trägerharzes ($X_2$)

Das Trägerharz ($X_2$) ist identisch mit dem in Beispiel 3 der DE—A—3325061 beschriebenen Bindemittel und wird wie folgt erhalten:

Aus 387 Teilen Hexamethylendiamin, 580 Teilen dimerer Fettsäure und 97 Teilen Leinölfettsäure werden mit 80 Teilen Xylol innerhalb von 2 Stunden bei 190°C 48 Teile einer wäßrigen Phase abgetrennt.

Zu 696 Teilen des verbleibenden Kondensats werden 552 Teile Methylisobutylketon zugefügt und 44 Teile Wasser ausgekreist. Die so erhaltene Diketiminlösung hat eine Aminzahl von 122 mg KOH/g und eine Lösemittelgehalt von 30%.

258,7 Teile eines Diglycidylethers aus Bis-(4-hydroxyphenyl)-2,2-propan und Epichlorhydrin mit einem Äquivalentgewicht von 485 werden in 65 Teilen Toluol gelöst und die enthaltenen Wasserspuren durch Auskreisen entfernt. Dazu werden 214,4 Teile der oben beschriebenen Ketiminlösung und 17,5 Teile Diethanolamin gegeben und auf 120°C erhitzt. Nach 2 Stunden ist kein Epoxid mehr nachweisbar. Im Vakuum werden 83,5 Teile Lösemittel abdestilliert und durch 16 Teile Butylglykol und 120,5 Teile Isobutanol ersetzt. Das Produkt hat einen Festgehalt von 70%; dies entspricht 57,2% nach hydrolytischer Abspaltung von Methylisobutylketon.

b) Herstellung eines unpigmentierten Elektrotauchlacks

122 Teile Trägerharz ($X_2$) aus Beispiel 6a) und 60 Teile Vernetzer (Y) aus Beispiel 5b) werden gemischt und, wie in Beispiel 5c) beschrieben, weiter behandelt.

Herstellung und Prüfung des pigmentierten Elektrotauchlacks:

Zu 900 Teilen des Klarlackbades aus Beispiel 6b) werden 100 Teile Pigmentpaste aus Beispiel 2 gegeben. Alles weitere erfolgt wie im Beispiel 5d). Es werden Überzüge mit brauchbarem Verlauf und folgenden sonstigen Eigenschaften erhalten:

| | |
|---|---|
| Abscheidespannung | 280 V |
| Ford-Umgriff [Reichweite in cm] | 21,3 |
| Acetonfestigkeit*) | 1—2 |
| Schlagtiefung: | 120 in × lb (=1,38 m·kg) |
| Salzprühtest nach ASTM, Unterwanderung am Ritz nach 500 Stunden: | 0,6 mm |

*) siehe Fußnote Tab. 1.

Tabelle 1: Ergebnisse der Pastenprüfungen gemäß Beispiel 5 bei 17 µm Schichtdicke

| Lackbad mit Pigmentpaste aus Beispiel | Abscheide-spannung [V] | Ford-Umgriff [Reichweite in cm] | Aceton-festigkeit *) | Schlag-tiefung | Salzsprühtest n. ASTM [mm Unterwanderung am Ritz nach 500 Stunden] |
|---|---|---|---|---|---|
| 1 | 230 | 21,4 | 1 - 2 | 100 in x lb (= 1,15 m·kg) | 0,5 |
| 2 | 220 | 22 | 1 | 140 in x lb (= 1,61 m·kg) | 0,5 |
| 3 | 200 | 21,2 | 1 - 2 | 40 in x lb (= 0,46 m·kg) | 0,8 |
| 4 | 190 | 19 | 1 | 80 in x lb (= 0,92 m·kg) | 0,3 |

*) Acetonfestigkeit: Getestet durch 50maliges Hin- und Herreiben mit einem mit Aceton getränkten Wattebausch
Note 1 = unangreifbar

**Patentansprüche für die Vertragsstaaten: BE DE FR GB NL**

1. Quartäre Ammoniumgruppen enthaltendes, wasserverdünnbares Kunstharz, dadurch gekennzeichnet, daß es pro quartäre Ammoniumgruppe noch mindestens eine basische sekundäre und gegebenenfalls tertiäre Aminogruppe enthält und ein Additionsprodukt ist wie es erhalten wird durch Reaktion von

(A) einem quartären Ammoniumsalz mit einem Molekulargewicht von 175 bis 1200, das durch Umsetzung von

(a) einer organischen Verbindung mit mindestens zwei basischen Aminogruppen pro Molekül, von denen eine primär und durch vorherige Umsetzung mit einem Keton als Ketimin geschützt ist und die übrigen basischen Aminogruppen tertiär sind, mit

(b) 15 bis 100 Mol.%, bezogen auf die Stickstoffatome der Komponente (a), einer organischen oder anorganischen Säure und anschließend mit

(c) 15 bis 100 Mol.%, bezogen auf die Stickstoffatome der Komponente (a), mindestens einer Monoepoxidverbindung

bei Temperaturen von 50—100°C und gegebenenfalls hydrolytische Abspaltung der Schutzgruppe hergestellt wird, mit

(B) 1—4 Äquivalenten eines Epoxidgruppen enthaltenden Harzes mit einem mittleren Molekulargewicht $\overline{M}_w$ zwischen 300 und 6000 und im Mittel 1,5 bis 3,0 Epoxidgruppen pro Molekul, pro geschützte bzw. entblockte primäre Aminogruppe der Komponente (A) bei Temperaturen von 30 bis 130°C umgesetzt wird, bis die theoretisch zu erwartende Abnahme des Epoxidwertes erreicht ist, und gegebenenfalls verbleibende Epoxidgruppen mit

(C) äquivalenten Mengen mindestens einer monofunktionellen organischen Verbindung, deren funktionelle Gruppe zur Addition in Epoxid befähigt ist, wobei tertiäre Amine und deren Salze ausgenommen sind, bis kein Epoxid mehr nachweisbar ist, wobei die Umsetzung des quartären Ammoniumsalzes (A) mit den Komponenten (B) und (C) auch in einer Stufe erfolgen kann.

2. Kunstharz nach Anspruch 1, dadurch gekennzeichnet, daß die Komponente (a) ein ketimingeschütztes primär/tertiäres Diamin der allgemeinen Formel (I) ist, wobei $R^1$ und $R^2$

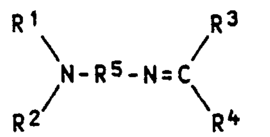

(I)

untereinander gleich oder verschieden sein können und für einen geradkettigen oder vertzweigten Alkylrest mit 1 bis 4 Kohlenstoffatomen stehen, $R^3$ und $R^4$ untereinander gleich oder verschieden sein können und für eine geradkettigen oder verzweigten Alkylrest mit 1 bis 8 Kohlenstoffatomen stehen oder das an $R^3$ und $R^4$ gebundene Kohlenstoffatom Bestandteil eines 5- bis 7-gliedrigen carbocyclischen Ringes ist, und $R^5$ geradkettig oder verzweigt sein kann und für einen zweiwertigen aliphatischen oder cycloaliphatischen Rest, der gegebenenfalls Heteroatome, wie Stickstoff, Sauerstoff oder Schwefel enthalten kann, steht.

3. Kunstharz nach Anspruch 1 oder 2, dadurch gekennzeichnet, daß die Säure (b) Essigsäure oder Ameisensäure ist.

4. Kunstharz nach einem der vorhergehenden Ansprüche, dadurch gekennzeichnet, daß die Monoepoxidverbindung (c) ein Epoxidierungsprodukt aus einem geradkettigen oder verzweigten aliphatischen, cycloaliphatischen oder araliphatischen Olefin ist.

5. Kunstharz nach einem der vorhergehenden Ansprüche, dadurch gekennzeichnet, daß das Epoxidgruppen enthaltende Material (B) 2,2-Bis-(4-hydroxyphenyl)-propan-diglycidylether oder ein im Mittel zwei Epoxygruppen pro Molekül enthaltendes, gegebenenfalls durch aliphatische Segmente elastifiziertes Polyadditionsprodukt aus 2,2-Bis-(4-hydroxyphenyl)-propan und dessen Diglycidylether ist.

6. Verfahren zur Herstellung eines quartäre Ammoniumgruppen enthaltenden, wasserverdünnbaren Kunstharzes nach Anspruch 1, dadurch gekennzeichnet, daß

(A) ein quartäres Ammoniumsalz mit einem Molekulargewicht von 175 bis 1200 durch Neutralisation von

(a) einer organischen Verbindung mit mindestens zwei basischen Aminogruppen pro Molekül, von denen eine primär und durch vorherige Umsetzung mit einem Keton als Ketimin geschützt ist und die übrigen basischen Aminogruppen tertiär sind, gegebenenfalls in einem inerten organischen Lösungsmittel, mit

(b) 15 bis 100 Mol.%, bezogen auf die Stickstoffatome der Komponente (a), einer organischen oder anorganischen Säure,

anschließende Umsetzung mit

(c) 15 bis 100 Mol.%, bezogen auf die Stickstoffatome der Komponente (a), mindestens einer Monoepoxidverbindung

bei Temperaturen von 50 bis 100°C und gegebenenfalls hydrolytische Abspaltung der Schutzgruppe hergestellt wird und mit

(B) 1 bis 4 Äquivalenten eines Epoxidgruppen enthaltenden Harzes mit einem mittleren Molekulargewicht $\bar{M}_w$ zwischen 300 und 6000 und im Mittel 1,5 bis 3,0 Epoxidgruppen pro Molekül, pro geschützte bzw. entblockte primäre Aminogruppe der Komponente (A) bei Temperaturen von 30 bis 130°C umgesetzt wird, bis die theoretisch zu erwartende Abnahme des Epoxidwertes erreicht ist, und gegebenenfalls verbleibende Epoxidgruppen mit

(C) äquivalenten Mengen mindestens einer monofunktionellen organischen Verbindung, deren funktionelle Gruppe zur Addition an Epoxid befähigt ist, wobei tertiäre Amine und deren Salze ausgenommen sind,

zur Reaktion gebracht wird, bis kein Epoxid mehr nachweisbar ist, wobei die Umsetzung des quartären Ammoniumsalzes (A) mit den Komponenten (B) und (C) auch in einer Stufe erfolgen kann.

7. Verfahren nach Anspruch 6, dadurch gekennzeichnet, daß die Komponente (a) ein ketimingeschütztes primär/tertiäres Diamin der allgemeinen Formel (I) ist, wobei $R^1$ und $R^2$

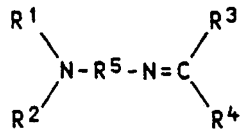

(I)

untereinander gleich oder verschieden sein können und für einen geradkettigen oder vertzweigten Alkylrest mit 1 bis 4 Kohlenstoffatomen stehen, $R^3$ und $R^4$ untereinander gleich oder verschieden sein können und für eine geradkettigen oder verzweigten Alkylrest mit 1 bis 8 Kohlenstoffatomen stehen oder das an $R^3$ und $R^4$ gebundene Kohlenstoffatom Bestandteil eines 5- bis 7-gliedrigen carbocyclischen Ringes ist, und $R^5$ geradkettig oder verzweigt sein kann und für einen zweiwertigen aliphatischen oder cycloaliphatischen Rest, der gegebenenfalls Heteroatome, wie Stickstoff, Sauerstoff oder Schwefel enthalten kann, steht.

8. Verfahren nach Anspruch 6, dadurch gekennzeichnet, daß die Säure (b) Essigsäure oder Ameisensäure ist.

9. Verfahren nach Anspruch 6, dadurch gekennzeichnet, daß die Monoepoxidverbindung (c) ein aus einem geradkettigen oder verzweigten aliphatischen, cycloaliphatischen oder araliphatischen Olefin erhaltenes Epoxidierungsprodukt ist.

10. Verfahren nach Anspruch 6, dadurch gekennzeichnet, daß das Epoxidgruppen enthaltende Harz (B) 2,2-Bis-(4-hydroxyphenyl)-propan-diglycidylether oder ein im Mittel zwei Epoxidgruppen pro Molekül enthaltendes gegebenenfalls durch aliphatische Segmente elastifiziertes Polyadditionsprodukt aus 2,2-Bis-(4-hydroxyphenyl)-propan und dessen Diglycidylether ist.

11. Verwendung des Kunstharzes nach einem der Ansprüche 1 bis 5 als Bindemittel für kathodisch abscheidbare Elektrotauchlacke.

12. Verwendung des Kunstharzes nach einem der Ansprüche 1 bis 5 als Reibharz für die Herstellung stabiler wäßriger Pigmentpasten, die für die Pigmentierung kathodisch abscheidbarer Elektrotauchlacke geeignet sind.

13. Pigmentpaste, bestehend aus

(α) 5 bis 50 Gew.% des Kunstharzes nach einem der Ansprüche 1 bis 5,

(β) 20 bis 65 Gew.% organischen und/oder anorganischen Pigmenten und/oder Füllstoffen,

(γ) 2 bis 20 Gew.% bei der kathodischen Elektrotauchlackierung üblichen organischen Lösemitteln,

(δ) 28 bis 55 Gew.% Wasser,

mit der Maßgabe, daß die Summe der unter (α) bis (δ) genannten Prozentzahlen gleich 100 ist, sowie gegebenenfalls

(ε) bis 5 Gew.%, bezogen auf die Summe der Komponenten (α) bis (δ), in der Lacktechnologie üblichen Hilfsmitteln und/oder Härtungskatalysatoren.

14. Kathodischer Elektrotauchlack, dadurch gekennzeichnet, daß er 2 bis 45 Gew.% der Pigmentpaste nach Anspruch 13 enthält.

**Patentansprüche für den Vertragsstaat: AT**

1. Verfahren zur Herstellung eines quartäre Ammoniumgruppen enthaltenden, wasserverdünnbaren Kunstharzes, das pro quartäre Ammoniumgruppe noch mindestens eine basische sekundäre und/oder tertiäre Aminogruppe enthält, dadurch gekennzeichnet, daß

(A) ein quartäres Ammoniumsalz mit einem Molekulargewicht von 175 bis 1200 durch Neutralisation von

(a) einer organischen Verbindung mit mindestens zwei basischen Aminogruppen pro Molekül, von denen eine primär und durch vorherige Umsetzung mit einem Keton als Ketimin geschützt ist und die übrigen basischen Aminogruppen tertiär sind, gegebenenfalls in einem inerten organischen Lösungsmittel, mit

(b) 15 bis 100 Mol.%, bezogen auf die Stickstoffatome der Komponente (a), einer organischen oder anorganischen Säure,

anschließende Umsetzung mit

(c) 15 bis 100 Mol.%, bezogen auf die Stickstoffatome der Komponente (a), mindestens einer Monoepoxidverbindung

bei Temperaturen von 50 bis 100°C und gegebenenfalls hydrolytische Abspaltung der Schutzgruppe hergestellt wird und mit

(B) 1 bis 4 Äquivalenten eines Epoxidgruppen enthaltenden Harzes mit einem mittleren Molekulargewicht $\overline{M}_w$ zwischen 300 und 6000 und im Mittel 1,5 bis 3,0 Epoxidgruppen pro Molekül, pro geschützte bzw. entblockte primäre Aminogruppe der Komponente (A) bei Temperaturen von 30 bis 130°C umgesetzt wird, bis die theoretisch zu erwartende Abnahme des Epoxidwertes erreicht ist, und gegebenenfalls verbleibende Epoxidgruppen mit

(C) äquivalenten Mengen mindestens einer monofunktionellen organischen Verbindung, deren funktionelle Gruppe zur Addition an Epoxid befähigt ist, wobei tertiäre Amine und deren Salze ausgenommen sind,

zur Reaktion gebracht wird, bis kein Epoxid mehr nachweisbar ist, wobei die Umsetzung des quartären Ammoniumsalzes (A) mit den Komponenten (B) und (C) auch in einer Stufe erfolgen kann.

2. Verfahren nach Anspruch 1, dadurch gekennzeichnet, daß die Komponente (a) ein ketimingeschütztes primär/tertiäres Diamin der allgemeinen Formel (I) ist, wobei $R^1$ und $R^2$

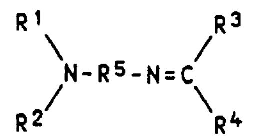

(I)

untereinander gleich oder verschieden sein können und für einen geradkettigen oder vertzweigten Alkylrest mit 1 bis 4 Kohlenstoffatomen stehen, $R^3$ und $R^4$ untereinander gleich oder verschieden sein können und für eine geradkettigen oder verzweigten Alkylrest mit 1 bis 8 Kohlenstoffatomen stehen oder das an $R^3$ und $R^4$ gebundene Kohlenstoffatom Bestandteil eines 5- bis 7-gliedrigen carbocyclischen Ringes ist, und $R^5$ geradkettig oder verzweigt sein kann und für einen zweiwertigen aliphatischen oder cycloaliphatischen Rest, der gegebenenfalls Heteroatome, wie Stickstoff, Sauerstoff oder Schwefel enthalten kann, steht.

3. Verfahren nach Anspruch 1, dadurch gekennzeichnet, daß die Säure (b) Essigsäure oder Ameisensäure ist.

4. Verfahren nach Anspruch 1, dadurch gekennzeichnet, daß die Monoepoxidverbindung (c) ein aus einem geradkettigen oder verzweigten aliphatischen, cycloaliphatischen oder araliphatischen Olefin erhaltenes Epoxidierungsprodukt ist.

5. Verfahren nach Anspruch 1, dadurch gekennzeichnet, daß das Epoxidgruppen enthaltende Harz (B) 2,2-Bis-(4-hydroxyphenyl)-propan-diglycidylether oder ein im Mittel zwei Epoxidgruppen pro Molekül enthaltendes gegebenenfalls durch aliphatische Segmente elastifiziertes Polyadditionsprodukt aus 2,2-Bis-(4-hydroxyphenyl)-propan und dessen Diglycidylether ist.

6. Verfahren zur Herstellung von Bindemitteln für kathodisch abscheidbare Elektrotauchlacke, dadurch gekennzeichnet, daß ein nach einem Verfahren gemäß einem der Ansprüche 1 bis 5 hergestelltes Kunstharz verwendet wird.

7. Verfahren zur Herstellung stabiler wäßriger Pigmentpasten, dadurch gekennzeichnet, daß diese aus

(α) 5 bis 50 Gew.% des Kunstharzes nach einem der Ansprüche 1 bis 5, hergestellten Kunstharzes

(β) 20 bis 65 Gew.% organischen und/oder anorganischen Pigmenten und/oder Füllstoffen,

(γ) 2 bis 20 Gew.% bei der kathodischen Elektrotauchlackierung üblichen organischen Lösemitteln,

(δ) 28 bis 55 Gew.% Wasser,

mit der Maßgabe, daß die Summe der unter (α) bis (δ) genannten Prozentzahlen gleich 100 ist, sowie gegebenenfalls

(ε) bis 5 Gew.%, bezogen auf die Summe der Komponenten (α) bis (δ), in der Lacktechnologie üblichen Hilfsmitteln und/oder Härtungskatalysatoren hergestellt werden.

8. Verfahren zur Herstellung kathodischer Elektrotauchlacke, dadurch gekennzeichnet, daß sie 2 bis 45 Gew.% der Pigmentpaste nach Anspruch 7 enthalten.

**Revendications pour les Etats contractants: BE DE FR GB NL**

1. Résine synthétique diluable à l'eau contenant des groupements ammonium quaternaires, caractérisée en ce qu'elle contient, par groupement ammonium quaternaire, au moins un groupement amino secondaire et éventuellement tertiaire et est un produit d'addition qui est obtenu par réaction de

A) un sel d'ammonium quaternaire ayant un poids moléculaire de 175 à 1200, qui a été obtenu par réaction de

a) un composé organique ayant au moins deux groupements amino basiques par molécule, dont un est primaire et est protégé par une réaction préalable avec une cétone sous forme de cétimine et les autres groupements amino basiques sont tertiaires, avec

b) 15 à 100% en moles, par rapport aux atomes d'azote du composant a), d'un acide organique ou minéral, et

ensuite réaction avec

c) 15 à 100% en moles, par rapport aux atomes d'azote du composant a), d'au moins un composé monoépoxyde

à une température de 50° à 100°C et éventuellement coupure hydrolytique du groupement protecteur, avec

B) 1 à 4 équivalents d'une résine contenant des groupements époxy ayant un poids moléculaire moyen $\overline{M}_w$ compris entre 300 et 6000 et en moyenne 1,5 à 3,0 groupements époxy par molécule, par groupement amino primaire protégé ou bloqué du composant A), à une température de 30 à 130°C jusqu'à obtention de la perte théorique attendue de l'indice d'époxy, et éventuellement des groupements époxy restants avec

C) des quantités équivalentes d'au moins un composé organique monofonctionnel dont le groupement fonctionnel peut s'additionner à un groupement époxy, les amines tertiaires et leurs sels étant exclus, jusqu'à ce que les groupements époxy ne soient plus décelables, la réaction du sel d'ammonium quaternaire (A) avec les composants (B) et (C) pouvant s'effectuer en une étape.

2. Résine synthétique selon la revendication 1, caractérisée en ce que le composant (a) est une diamine primaire/tertiaire protégé par un groupement cétimine de formule générale I

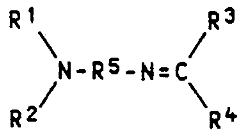

(I)

dans laquelle $R^1$ et $R^2$ peuvent être identiques ou différents et représentent des restes alkyle linéaires ou ramifiés de 1 à 4 atomes de carbone, $R^3$ et $R^4$ peuvent être identiques ou différents et représentent des restes alkyle linéaires ou ramifiés de 1 à 8 atomes de carbone ou le radical hydrocarboné lié à $R^3$ et $R^4$ d'un noyau carbocyclique à 5—7 chaînons, et $R^5$ peut être linéaire ou ramifié et est mis pour un reste aliphatique ou cycloaliphatique bivalent qui peut contenir éventuellement un hétéroatome, comme l'azote, l'oxygène ou le soufre.

3. Résine synthétique selon la revendication 1 ou 2, caractérisée en ce que l'acide (b) est l'acide acétique ou l'acide formique.

4. Résine synthétique selon l'une des revendications précédentes, caractérisée en ce que le composé monoépoxy (c) est un produit d'époxydation d'une oléfine aliphatique, cycloaliphatique ou araliphatique linéaire ou ramifiée.

5. Résine synthétique selon l'une des revendications précédentes, caractérisée en ce que la substance contenant des groupements époxy (B) est l'éther diglycidylique du 2,2-bis(4-hydroxyphényl)propane ou un produit de polyaddition contenant en moyenne deux groupements époxy par molécule, éventuellement élastifié par des segments aliphatiques, du 2,2-bis-(4-hydroxyphényl)propane et de son éther diglycidylique.

6. Procédé de préparation d'une résine synthétique diluable à l'eau contenant des groupements ammonium quaternaires selon la revendication 1, caractérisé en ce que

A) on prépare un sel d'ammonium quaternaire ayant un poids moléculaire de 175 à 1200 par neutralisation de

a) un composé organique ayant au moins deux groupements amino basiques par molécule dont un est primaire et est protégé par réaction préalable avec une cétone sous forme de cétimine et les autres groupements amino basiques sont tertiaires, éventuellement dans un solvant organique inerte, avec

b) 15 à 100% en poids, par rapport aux atomes d'azote du composant (a), d'un acide organique ou minéral,

réaction ultérieure avec

c) 15 à 100% en moles, par rapport aux atomes d'azote du composant (a), d'azote du composant (a), d'au moins un composé monoépoxy,

à des températures de 50° à 100°C et éventuellement coupure hydrolytique du groupement protecteur, et

B) on met en réaction avec 1 à 4 équivalents d'une résine contenant des groupements époxy ayant un poids moléculaire moyen $\overline{M}_w$ compris entre 300 et 6000 et en moyenne 1,5 à 3,0 groupements époxy par molécule, par groupement amino primaire protégé ou bloque du composant (A) à des températures de 30° à 130°C, jusqu'à ce qu'on obtienne la perte théorique attendue de l'indice d'époxy, puis éventuellement on fait réagir les groupements époxy restant avec

C) des quantités équivalentes d'au moins un composé organique monofonctionnel dont le groupement fonctionnel peut s'additionner au groupement époxy, les amines tertiaires et leurs sels étant exclus,

jusqu'à ce que les groupements époxy ne soient plus décelables, la réaction du sel d'ammonium quaternaire (A) avec les composants (B) et (C) pouvant se faire en une seule étape.

7. Procédé selon la revendication 6, caractérisé en ce que le composant (a) est une diamine primaire/tertiaire protégé par un groupement cétimine de formule générale I

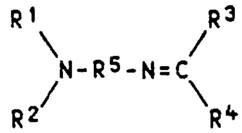

(I)

dans laquelle $R^1$ et $R^2$ peuvent être identiques ou différents et représentent des restes alkyle linéaires ou ramifiés de 1 à 4 atomes de carbone, $R^3$ et $R^4$ peuvent être identiques ou différents et représentent des restes alkyle linéaires ou ramifiés de 1 à 8 atomes de carbone ou le radical hydrocarboné lié à $R^3$ et $R^4$ d'un noyau carbocyclique à 5—7 chaînons, et $R^5$ peut être linéaire ou ramifié et est mis pour un reste aliphatique ou cycloaliphatique bivalent qui peut contenir éventuellement un hétéroatome, comme l'azote, l'oxygène ou le soufre.

8. Procédé selon la revendication 6, caractérisé en ce que l'acide (b) est l'acide acétique ou l'acide formique.

9. Procédé selon la revendication 6, caractérisé en ce que le composé monoépoxy (c) est un produit d'époxydation d'une oléfine aliphatique, cycloaliphatique ou araliphatique linéaire ou ramifiée.

10. Procédé selon la revendication 6, caractérisé en ce que la substance contenant des groupements époxy (B) est l'éther diglycidylique du 2,2-bis(4-hydroxyphényl)propane ou un produit de polyaddition contenant en moyenne deux groupements époxy par molécule, éventuellement élastifié par des segments aliphatiques, du 2,2-bis-(4-hydroxyphényl)propane et de son éther diglycidylique.

11. Utilisation de la résine synthétique selon l'une des revendications 1 à 5, comme liant de laque de trempage élctrophorétique cathodique.

12. Utilisation de la résine synthétique selon l'une des revendications 1 à 5, comme résine pulvérulente pour la préparation de pâtes de pigments aqueuses stables, qui sont utilisées pour la pigmentation de laques de trempage électrophorétique cathodique.

13. Pâtes de pigment, se composant de

α) 5 à 50% en poids de la résine synthétique selon l'une des revendications 1 à 5,

β) 20 à 65% en poids de pigments et/ou charges organiques et/ou minéraux,

γ) 2 à 20% en poids de solvants organiques usuels pour le trempage électrophorétique cathodique,

δ) 28 à 55% en poids d'eau,

pourvu que la somme des quantités de produits sous (α) à (δ) soit égale à 100, ainsi éventuellement que de

ε) jusqu'à 5% en poids par rapport à la somme des composants (α) à (δ), d'adjuvants et/ou de durcisseurs usuels dans la technologie des laques ou vernis.

14. Laque de trempage électrophorétique cathodique, caractérisée en ce qu'elle contient de 2 à 45% en poids de la pâte de pigment selon la revendication 13.

**Revendications pour l'Etat contractant: AT**

1. Procédé de préparation d'une résine synthétique diluable à l'eau, contenant des groupements ammonium quaternaires, qui contient, par groupement ammonium quaternaire, encore au moins un groupement amino basique secondaire et/ou tertiaire, caractérisé en ce que

A) on prépare un sel d'ammonium quaternaire ayant un poids moléculaire de 175 à 1200 par neutralisation de

a) un composé organique ayant au moins deux groupements amino basiques par molécule dont un est primaire et est protégé par réaction préalable avec une cétone sous forme de cétimine et les autres groupements amino basiques sont tertiaires, éventuellement dans un solvant organique inerte, avec

b) 15 à 100% en poids, par rapport aux atomes d'azote du composant (a), d'un acide organique ou minéral,

réaction ultérieure avec

c) 15 à 100% en moles, par rapport aux atomes d'azote du composant (a), d'au moins un composé monoépoxy,

à des températures de 50° à 100°C et éventuellement coupure hydrolytique du groupement protecteur, et

B) on met en réaction avec 1 à 4 équivalents d'une résine contenant des groupements époxy ayant un poids moléculaire moyen $\overline{M}_w$ compris entre 300 et 6000 et en moyenne 1,5 à 3,0 groupements époxy par molécule, par groupement amino primaire protégé ou bloque du composant (A) à des températures de 30° à 130°C, jusqu'à ce qu'on obtienne la perte théorique attendue de l'indice d'époxy, puis éventuellement on fait réagir les groupements époxy restant avec

C) des quantités équivalentes d'au moins un composé organique monofonctionnel dont le groupement fonctionnel peut s'additionner au groupement époxy, les amines tertiaires et leurs sels étant exclus,

jusqu'à ce que les groupements époxy ne soient plus décelables, la réaction du sel d'ammonium quaternaire (A) avec les composants (B) et (C) pouvant se faire en une seule étape.

2. Procédé selon la revendication 1, caractérisé en ce que le composant (a) est une diamine primaire/tertiaire protégée par un groupement cétimine de formule générale I

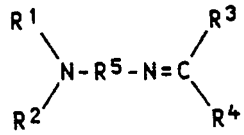

(I)

dans laquelle $R^1$ et $R^2$ peuvent être identiques ou différents et représentent des restes alkyle linéaires ou ramifiés de 1 à 4 atomes de carbone, $R^3$ et $R^4$ peuvent être identiques ou différents et représentent des restes alkyle linéaires ou ramifiés de 1 à 8 atomes de carbone ou le radical hydrocarboné lié à $R^3$ et $R^4$ d'un noyau carbocyclique à 5—7 chaînons, et $R^5$ peut être linéaire ou ramifié et est mis pour un reste aliphatique ou cycloaliphatique bivalent qui peut contenir éventuellement un hétéroatome, comme l'azote, l'oxygène ou le soufre.

3. Procédé selon la revendication 1, caractérisé en ce que l'acide (b) est l'acide acétique ou l'acide formique.

4. Procédé selon la revendication 1, caractérisé en ce que le composé monoépoxy (c) est un produit d'époxydation d'une oléfine aliphatique, cycloaliphatique ou araliphatique linéaire ou ramifiée.

5. Procéde selon la revendication 1, caractérisé en ce que la substance contenant des groupements époxy (B) est l'éther diglycidylique du 2,2-bis(4-hydroxyphényl)propane ou un produit de polyaddition contenant en moyenne deux groupements époxy par molécule, éventuellement élastifié par des segments aliphatiques, du 2,2-bis-(4-hydroxyphényl)propane et de son éther diglycidylique.

6. Procédé de préparation de liants pour laques de trempage électrophorétique cathodique, caractérisé en ce qu'on utilise une résine synthétique préparée selon un procédé suivant l'une des revendications 1 à 5.

7. Procédé de préparation de pâtes de pigment aqueuses stables, caractérisé en ce qu'on utilise une pâte de pigment se composant de

α) 5 à 50% en poids de la résine synthétique selon l'une des revendications 1 à 5,

β) 20 à 65% en poids de pigments et/ou charges organiques et/ou minéraux,

γ) 2 à 20% en poids de solvants organiques usuels pour le trempage électrophorétique cathodique,

δ) 28 à 55% en poids d'eau,

pourvu que la somme des quantités de produits sous (α) à (δ) soit égale à 100, ainsi éventuellement que de

ε) jusqu'à 5% en poids par rapport à la somme des composants (α) à (δ), d'adjuvants et/ou de durcisseurs usuels dans la technologie des laques ou vernis.

8. Procédé de préparation de laques de trempage électrophorétique cathodique, caractérisée en ce qu'elles contiennent de 2 à 45% en poids de la pâte de pigment selon la revendication 7.

**Claims for the Contracting States: BE DE FR GB NL**

1. A water-dilutable synthetic resin containing quaternary ammonium groups, which furthermore contains one or more basic secondary and, if required, tertiary amino groups per quaternary ammonium group, and is an adduct as obtained by reaction of

(A) a quaternary ammonium salt having a molecular weight of 175—1200, which is prepared by reacting

(a) an organic compound possessing two or more basic amino groups per molecule, one of which is a primary group and is protected as a ketimine by prior reaction with a ketone, and the remaining basic amino groups are tertiary groups with

(b) from 15 to 100 mol%, based on the nitrogen atoms of component (a), of an organic or inorganic acid and subsequently with

(c) from 15 to 100 mol%, based on the nitrogen atoms of component (a), of one or more monoepoxide compounds, at from 50 to 100°C, and, if required, eliminating the protective group hydrolytically, and

(B) from 1 to 4 equivalents, per protected or unblocked primary amino group of component (A), of a resin which has a mean molecular weight $\overline{M}_w$ of from 300 to 6000 and contains on average from 1.5 to 3.0 epoxide groups per molecule, at from 30 to 130°C, until the epoxide value has decreased by the theoretically expected amount, and any remaining epoxide groups are reacted with

(C) an equivalent amount of one or more monofunctional organic compounds whose functional group is capable of undergoing an addition reaction with an epoxide, with the exception of tertiary amines and their salts,

until no more epoxide is detectable, and the reaction of the quaternary ammonium salt (A) with components (B) and (C) may also be carried out in one stage.

2. A synthetic resin as claimed in claim 1, wherein component (a) is a ketimine-protected primary/tertiary diamine of the formula (I)

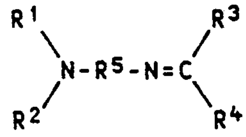

(I)

where $R^1$ and $R^2$ may be identical or different and are each straight-chain or branched alkyl of 1 to 4 carbon atoms, $R^3$ and $R^4$ may be identical or different and are each straight-chain or branched alkyl of 1 to 8 carbon atoms, or the carbon atom bonded to $R^3$ and $R^4$ forms part of a 5-membered to 7-membered carbocyclic ring, and $R^5$ may be straight-chain or branched and is a divalent aliphatic or cycloaliphatic radical which may or may not contain heteroatoms, such as nitrogen, oxygen or sulfur.

3. A synthetic resin as claimed in claim 1 or 2, wherein the acid (b) is acetic acid or formic acid.

4. A synthetic resin as claimed in any of the preceding claims, wherein the monoepoxide compound (c) is an epoxidation product of a straight-chain or branched aliphatic, cycloaliphatic or araliphatic olefin.

5. A synthetic resin as claimed in any of the preceding claims, wherein the material (B) containing epoxide groups is 2,2-bis-(4-hydroxyphenyl)-propanediglycidyl ether or is a·polyadduct of 2,2-bis-(4-hydroxyphenyl)-propane and its diglycidyl ether, which polyadduct contains on average two epoxide groups per molecule and may be elastified by aliphatic segments.

6. A process for the preparation of a water-dilutable synthetic resin containing quaternary ammonium groups as claimed in claim 1, wherein

(A) a quaternary ammonium salt having a molecular weight of 175—1200 is prepared by neutralizing

(a) an organic compound containing two or more basic amino groups per molecule, one of which is a primary group and is protected as a ketimine by prior reaction with a ketone, and the remaining basic amino groups are tertiary groups, in the presence or absence of an inert organic solvent, with

(b) from 15 to 100 mol%, based on the nitrogen atoms of component (a), of an organic or inorganic acid,

reacting the product with

(c) from 15 to 100 mol%, based on the nitrogen atoms of component (a), of one or more monoepoxide compounds

at from 50 to 100°C, and if required, then eliminating the protective group hydrolytically, and is reacted with

(B) from 1 to 4 equivalents, per protected or unblocked primary amino group of component (A), of a resin which has a mean molecular weight $\overline{M}_w$ of from 300 to 6000 and contains on average from 1.5 to 3.0 epoxide groups per molecule, at from 30 to 130°C, until the epoxide value has decreased by the theoretically expected amount, and any remaining epoxide groups are reacted with

(C) an equivalent amount of one or more monofunctional organic compounds whose functional group is capable of undergoing an addition reaction with an epoxide, with the exception of tertiary amines and their salts,

until no more epoxide is detectable, and the reaction of the quaternary ammonium salt (A) with components (B) and (C) may also be carried out in one stage.

7. A process as claimed in claim 6, wherein component (a) is a ketimine-protected primary/tertiary diamine of the formula (I)

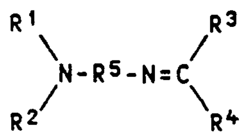

(I)

where $R^1$ and $R^2$ may be identical or different and are each straight-chain or branched alkyl of 1 to 4 carbon atoms, $R^3$ and $R^4$ may be identical or different and are each straight-chain or branched alkyl of 1 to 8 carbon atoms, or the carbon atom bonded to $R^3$ and $R^4$ forms part of a 5-membered to 7-membered carbocyclic ring, and $R^5$ may be straight-chain or branched and is a divalent aliphatic or cycloaliphatic radical which may or may not contain heteroatoms, such as nitrogen, oxygen or sulfur.

8. A process as claimed in claim 6, wherein the acid (b) is acetic acid or formic acid.

9. A process as claimed in claim 6, wherein the monoepoxide compound (c) is an epoxidation product obtained from a straight-chain or branched aliphatic, cycloaliphatic or araliphatic olefin.

10. A process as claimed in claim 6, wherein the resin (B) containing epoxide groups is 2,2-bis-(4-hydroxyphenyl)-propanediglycidyl ether or is a polyadduct of 2,2-bis-(4-hydroxyphenyl)-propane and its diglycidyl ether, which polyadduct contains on average two epoxide groups per molecule and may be elastified by aliphatic segments.

11. Use of a synthetic resin as claimed in any of claims 1 to 5 as a binder for cathodic electrocoating finishes.

12. Use of a synthetic resin as claimed in any of claims 1 to 5 as a grinding resin for the preparation of a stable aqueous pigment paste which is suitable for pigmenting cathodic electrocoating finishes.

13. A pigment paste which consists of

(α) from 5 to 50% by weight of a synthetic resin as claimed in any of claims 1 to 5,

(β) from 20 to 65% by weight of organic and/or inorganic pigments and/or fillers,

(γ) from 2 to 20% by weight of organic solvents conventionally used for cathodic electrocoating, and

(δ) from 28 to 55% by weight of water,

with the proviso that the sum of the percentages stated under (α) to (δ) is 100, with or without

(ε) up to 5% by weight, based on the sum of components (α) to (δ), of assistants and/or curing catalysts conventionally employed in surface coating technology.

14. A cathodic electrocoating finish, which contains from 2 to 45% by weight of a pigment paste as claimed in claim 13.

**Claims for the Contracting State: AT**

1. A process for the preparation of a water-dilutable synthetic resin containing quaternary ammonium groups, which furthermore contains one or more basic secondary or tertiary amino groups per quaternary ammonium group, wherein

(A) a quaternary ammonium salt having a molecular weight of 175—1200 is prepared by neutralizing

(a) an organic compound containing two or more basic amino groups per molecule, one of which is a primary group and is protected as a ketimine by prior reaction with a ketone, and the remaining basic amino groups are tertiary groups, in the presence or absence of an inert organic solvent, with

(b) from 15 to 100 mol%, based on the nitrogen atoms of component (a), of an organic or inorganic acid, reacting the product with

(c) from 15 to 100 mol%, based on the nitrogen atoms of component (a), of one or more monoepoxide compounds

at from 50 to 100°C, and, if required, then eliminating the protective group hydrolytically, and is reacted with

(B) from 1 to 4 equivalents, per protected or unblocked primary amino group of component (A), of a resin which has a mean molecular weight $\overline{M}_w$ of from 300 to 6000 and contains on average from 1.5 to 3.0 epoxide groups per molecule, at from 30 to 130°C, until the epoxide value has decreased by the theoretically expected amount, and any remaining epoxide groups are reacted with

(C) an equivalent amount of one or more monofunctional organic compounds whose functional group is capable of undergoing an addition reaction with an epoxide, with the exception of tertiary amines and their salts,

until no more epoxide is detectable, and the reaction of the quaternary ammonium salt (A) with components (B) and (C) may also be carried out in one stage.

2. A process as claimed in claim 1, wherein component (a) is a ketimine-protected primary/tertiary diamine of the formula (I)

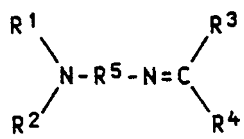

(I)

where $R^1$ and $R^2$ may be identical or different and are each straight-chain or branched alkyl of 1 to 4 carbon atoms, $R^3$ and $R^4$ may be identical or different and are each straight-chain or branched alkyl of 1 to 8 carbon atoms, or the carbon atom bonded to $R^3$ and $R^4$ forms part of a 5-membered to 7-membered carbocyclic ring, and $R^5$ may be straight-chain or branched and is a divalent aliphatic or cycloaliphatic radical which may or may not contain heteroatoms, such as nitrogen, oxygen or sulfur.

3. A process as claimed in claim 1, wherein the acid (b) is acetic acid or formic acid.

4. A process as claimed in claim 1, wherein the monoepoxide compound (c) is an epoxidation product obtained from a straight-chain or branched aliphatic, cycloaliphatic or araliphatic olefin.

5. A process as claimed in claim 1, wherein the resin (B) containing epoxide groups is 2,2-bis-(4-hydroxyphenyl)-propanediglycidyl ether or is a polyadduct of 2,2-bis-(4-hydroxyphenyl)-propane and its diglycidyl ether, which polyadduct contains on average two epoxide groups per molecule and may be elastified by aliphatic segments.

6. A process for the preparation of a binder for cathodic electrocoating finishes, wherein a synthetic resin prepared by a process as claimed in any of claims 1 to 5 is used.

7. A process for the preparation of a stable aqueous pigment paste which is prepared

(α) from 5 to 50% by weight of a synthetic resin prepared as claimed in any of claims 1 to 5,

(β) from 20 to 65% by weight of organic and/or inorganic pigments and/or fillers,

(γ) from 2 to 20% by weight of organic solvents conventionally used for cathodic electrocoating, and

(δ) from 28 to 55% by weight of water,

with the proviso that the sum of the percentages stated under (α) to (δ) is 100, with or without

(ε) up to 5% by weight, based on the sum of components (α) to (δ), of assistants and/or curing catalysts conventionally employed in surface coating technology.

8. A process for the preparation of a cathodic electrocoating finish, which contains from 2 to 45% by weight of a pigment paste as claimed in claim 7.